# EUROPEAN PATENT SPECIFICATION

(11) **EP 4 049 532 B1**
(45) Date of publication and mention of the grant of the patent: **13.12.2023**
(21) Application number: 22159042.5
(22) Date of filing: 26.02.2022
(51) Int. Cl.: A01K 1/00, E04B 9/00, E04B 9/02, E04B 9/04, E04B 9/18, E04B 9/22, E04B 9/24, E04B 1/94

(54) **LIVESTOCK SHED WITH A CEILING**
VIEHSTALL MIT EINER DECKE
ETABLE AVEC UN PLAFOND

(30) Priority: 26.02.2021 NL 2027655
(43) Date of publication of application: 31.08.2022
(73) Proprietor: Slaats B.V., 5768 RW Meijel (NL)
(72) Inventor: VAN ASTEN, Marko, 6029 RS Sterksel (NL)
(74) Representative: Verhees, Godefridus Josephus Maria

(56) References cited:
- AU-A4- 2013 100 047
- CN-U- 206 267 394
- CN-U- 207 032 622

## Description

### Technical field of the invention

The invention relates to a livestock shed provided with a roof and a ceiling which is suspended from the roof and is at a distance from the roof, which ceiling comprises ceiling panels, as well as a suspension system with which the ceiling panels are suspended from the roof.

### Background of the invention

Such a livestock shed is generally known. High demands are made on the ceiling of a livestock shed with regard to fire safety. Furthermore, the room in which the livestock is located must be sufficiently ventilated and the moisture content must be well regulated.
CN207032622U discloses a composite ceiling structure for rapid installation of ceilings, which comprises ceiling panels and a metal frame for mounting the ceiling panels; the ceiling panels being made of magnesium oxide,
AU2013100047A discloses a roof structure comprising a plurality of panels, wherein the panels are made of a material with high fire rating, such as magnesium oxide board.

### Summary of the invention

It is an object of the invention according to claim 1 to provide a livestock shed of the type described in the preamble which meets the fire safety requirements better than the known livestock sheds, without limiting the ventilation options and while maintaining a good moisture regulation in the livestock shed. To this end, the livestock shed according to the invention is characterized in that the ceiling panels are substantially made of magnesium oxide and are provided with ventilation through holes, the size of the ventilation holes being 2-8% of the surface area of the ceiling panels including the ventilation holes. The size of the ventilation holes is here understood to mean the cross-sectional area of all ventilation holes present in a ceiling panel together. Sheets of magnesium oxide with fire class A are known per se, but the use as ceiling panels in livestock sheds has never been considered because of the limitations this entails in terms of ventilation options and moisture regulation. Providing the ceiling panels with the correct number of holes makes it easier to meet the ventilation needs and moisture regulation in a livestock shed without significantly affecting fire safety. The size of the ventilation holes can be selected within the specified range depending on the ventilation requirement and desired moisture regulation of the type and amount of animals kept in the livestock shed. Preferably, the ventilation holes are evenly distributed over the surface of the ceiling panel.

In order to be able to properly regulate the ventilation, the connection of the ceiling to the shed walls of a space in the livestock shed in which the ceiling is present is at least substantially airtight.

The suspension system for the ceiling panels must also be designed in such a way that fire safety requirements can be met. To this end, the suspension system has strips of magnesium oxide and chains through which the strips are suspended from the roof. The magnesium oxide strips are preferably attached to beams with the width of the strips being greater than that of the beams and projecting on either side of the beams.

The suspension system further preferably has H-profiles which extend between the beams and rest with their ends on the strips. The ceiling panels are present with the longitudinal edges in the H-profiles and are supported by these H-profiles. The length of the H-profiles is preferably slightly longer than that of the ceiling panels in order to prevent mechanical stresses in the ceiling panels.

To prevent the presence of air ducts between the strips and the ceiling panels, which can provide oxygen in the event of a fire, the connection of the ceiling panels to the strips is sealed with a layer of PU (polyurethane) that meets the required fire resistance. The PU also ensures that the ceiling panels are firmly attached to the supporting structure and that this attachment remains intact for at least 30 minutes in the event of a fire.

Glass wool can also be applied to the ceiling panels in order to obtain extra insulation and fire retardancy while retaining the desired air passage.

### Brief description of the drawings

The invention will be further elucidated below on the basis of drawings. These drawings show embodiments of the livestock shed according to the present invention. In the drawings:
Figure 1 shows a cross-section of an embodiment of the livestock shed according to the invention;
Figure 2 shows a part of the ceiling of the livestock shed in perspective;
Figure 3 shows a section of a part of the ceiling of the livestock shed; and
Figure 4 shows the ceiling of a second embodiment of the livestock shed according to the invention provided with glass wool.

### Detailed description of the drawings

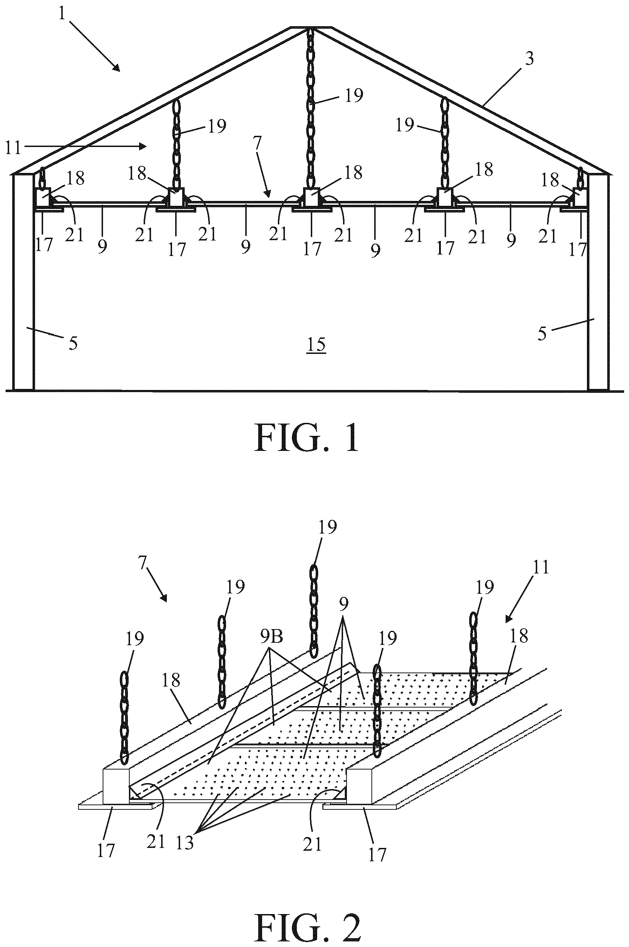

Figure 1 shows a cross-section of an embodiment of the livestock shed according to the invention. The livestock shed 1 has a roof 3 which rests on shed walls 5 and a ceiling 7 which is suspended from the roof and is at a distance from the roof 3. The ceiling 7 has ceiling panels 9 and a suspension system 11 with which the ceiling panels 9 are suspended from the roof 3. The ceiling panels 9 are mainly made of magnesium oxide and are provided with through-ventilation holes 13 which are distributed over the surface of the ceiling panels. The size of the ventilation holes 13 is 2-8% of the surface of the ceiling panels 9, including the ventilation holes 13. The thickness of the ceiling panels is preferably between 3-15 mm. The ceiling 7 is enclosed almost airtightly between the shed walls 5 of the space 15 in the livestock shed 1 in which the ceiling 7 is present.

In figure 2 a part of the ceiling 7 of the livestock shed is shown in perspective. The suspension system 11 has strips of magnesium oxide 17 which are suspended from the roof 3 by means of chains 19 . The ceiling panels 9 rest with edge parts 9B on the strips 17. In this embodiment, these strips 17 are screwed against beams 18 to which the chains 19 are attached. The connection of the edge parts 9B of the ceiling panels 9 to the strips 17 is sealed with a layer of PU 21 of a material that meets the required fire resistance. In this embodiment this is achieved by arranging a layer of PU 21 between the edge parts 9B of the ceiling panels 9 and the beams 18, so that no air channels are present between the strips 17 and the ceiling panels 9.

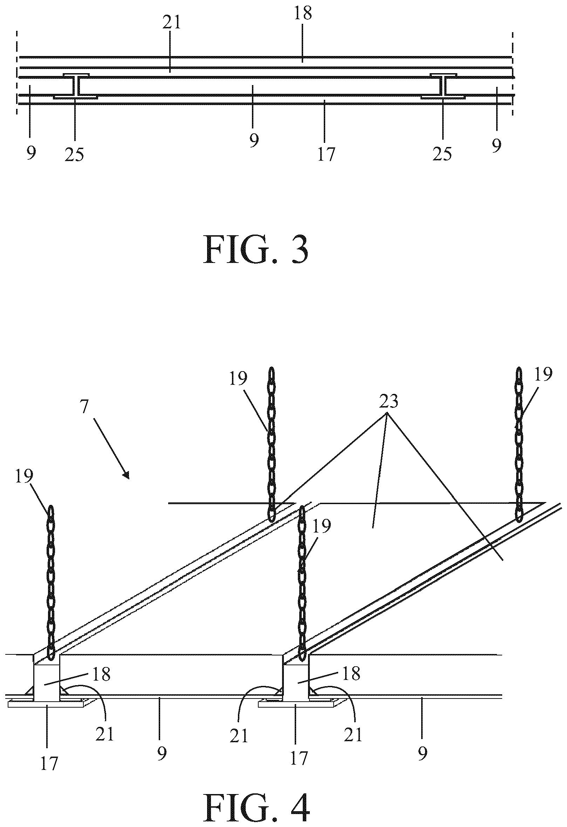

In figure 3 a part of the ceiling of the livestock shed is shown in a cross section parallel to the beams. H-profiles 25 extend between the beams 18, in which the ceiling panels 9 rest. The length of the H-profiles is preferably slightly longer than that of the ceiling panels in order to prevent mechanical stresses in the ceiling panels. In this section, the beam 18 is located behind the ceiling panels 9, the PU layer 21 and the strip 17 attached to the beam below. The beam is preferably also made of magnesium oxide or another fire-retardant or non-combustible material.

Figure 4 shows a part of the ceiling of a second embodiment of the livestock shed according to the invention. All parts similar to those of the above-described first embodiment are denoted by the same reference numerals. In this embodiment, glass wool 23 is present on the ceiling panels for extra insulation and fire resistance. The most suitably applied thickness for the glass wool 23 is between 50 and 120 mm, depending on the animal category.

Although the invention has been elucidated in the foregoing with reference to the drawings, it should be noted that the invention is by no means limited to the embodiments shown in the drawings. The invention also extends to all embodiments deviating from the embodiments shown in the drawings within the framework defined by the claims..

## Claims

1. Livestock shed (1) provided with a roof (3) and a ceiling (7) that is suspended from the roof and is at a distance from the roof (3), which ceiling (7) comprises ceiling panels (9), as well as a suspension system (11 ) with which the ceiling panels (9) are suspended from the roof (3), wherein the ceiling panels (9) are mainly made of magnesium oxide, **characterized in that** the ceiling panels are provided with ventilation through holes (13), the size of the ventilation holes (13) being 2-8% of the surface of the ceiling panels (9) including the ventilation holes (13), the size of the ventilation holes meaning the cross-sectional area of all ventilation holes present in a ceiling panel together.

2. Livestock shed according to claim 1, **characterized in that** the connection of the ceiling (7) to the shed walls (5) of a space (15) in the livestock shed (1) in which the ceiling (7) is present is at least substantially airtight.

3. Livestock shed according to claim 1 or 2, **characterized in that** the suspension system (11) comprises magnesium oxide strips (17), as well as chains (19) which are connected to the strips (17) and to the roof (3), wherein the ceiling panels (9) with edge parts (9B) rest on the strips (17).

4. Livestock shed according to claim 1, 2 or 3, **characterized in that** the connection of the edge parts (9B) of the ceiling panels (9) to the magnesium oxide strips (17) is sealed with a layer of polyurethane (21) that meets the required fire resistance.

5. Livestock shed according to claim 1, 2, 3 or 4, **characterized in that** glass wool (23) is present on the ceiling panels (9).

## Patentansprüche

1. Viehstall (1) versehen mit einem Dach (3) und einer in Abstand zum Dach (3) abgehängten Decke (7), die Deckenplatten (9) umfasst, sowie ein Aufhängungssystem (11), mit dem die Deckenplatten (9) am Dach (3) aufgehängt sind, wobei die Deckenplatten (9) überwiegend aus Magnesiumoxid bestehen, **dadurch gekennzeichnet, dass** die Deckenplatten mit durchgehenden Lüftungslöcher (13) versehen sind, wobei die Größe der Lüftungslöcher (13) 2-8 % der Fläche der Deckenplatten (9) einschließlich der Lüftungslöcher (13) beträgt, wobei die Größe der Lüftungslöcher definiert ist als die Querschnittsfläche aller im Deckenpaneel vorhandenen Lüftungslöcher zusammen.

2. Viehstall nach Anspruch 1, **dadurch gekennzeichnet, dass** die der Anschluss der Decke (7) an die Stallwänden (5) eines Raumes (15) im Viehstall (1), in dem die Decke (7) vorhanden ist, zumindest nahezu luftdicht ist.

3. Viehstall nach Anspruch 1 oder 2, **dadurch gekennzeichnet, dass** das Aufhängungssystem (11) Magnesiumoxidstreifen (17) sowie mit den Streifen (17) und dem Dach (3) verbundene Ketten (19) umfasst, wobei die Deckenplatten (9) mit Randteilen (9B) auf den Leisten (17) aufliegen.

4. Viehstall nach Anspruch 1, 2 oder 3, **dadurch gekennzeichnet, dass** die Verbindung der Randteile (9B) der Deckenplatten (9) mit den Magnesiumoxidstreifen (17) mit einer Schicht aus Polyurethan (21) abgedichtet ist, die den geforderten Feuerwiderstand erfüllt.

5. Viehstall nach Anspruch 1, 2, 3 oder 4, **dadurch gekennzeichnet, dass** auf den Deckenplatten (9) Glaswolle (23) vorhanden ist.

## Revendications

1. Étable d'élevage (1) pourvu d'un toit (3) et d'un plafond (7) suspendu au toit et éloigné du toit (3), lequel plafond (7) comprend des panneaux de plafond (9), ainsi qu'un système de suspension (11) avec lequel les panneaux de plafond (9) sont suspendus au toit (3), les panneaux de plafond (9) étant principalement constitués d'oxyde de magnésium, **caractérisé en ce que** les panneaux de plafond sont pourvus d'une trous de ventilation (13), la taille des trous de ventilation (13) étant de 2 à 8 % de la surface des panneaux de plafond (9), y compris les trous de ventilation (13), la taille des trous de ventilation étant définie comme la section transversale de tous les trous de ventilation présents ensemble dans un panneau de plafond.

2. Étable selon la revendication 1, **caractérisé en ce que** le raccordement du plafond (7) aux parois du étable (5) d'un espace (15) de l'étable (1) dans lequel le plafond (7) est présent est au moins pratiquement hermétique.

3. Étable selon la revendication 1 ou 2, **caractérisé en ce que** le système de suspension (11) comprend des bandes d'oxyde de magnésium (17), ainsi que des chaînes (19) qui sont reliées aux bandes (17) et au toit (3 ), dans lequel les panneaux de plafond (9) avec des parties de bord (9B) reposent sur les bandes (17).

4. Étable selon la revendication 1, 2 ou 3, **caractérisée en ce que** la liaison des parties de bordure (9B) des panneaux de plafond (9) aux bandes d'oxyde de magnésium (17) est scellée par une couche de polyuréthane (21) qui répond à la résistance au feu requise.

5. Étable selon la revendication 1, 2, 3 ou 4, **caractérisée en ce que** de la laine de verre (23) est présente sur les panneaux de plafond (9).
